# EUROPÄISCHE PATENTSCHRIFT

(11) **EP 1 031 469 B1**
(45) Veröffentlichungstag und Bekanntmachung des Hinweises auf die Patenterteilung: **17.12.2003**
(21) Anmeldenummer: 99103696.3
(22) Anmeldetag: 25.02.1999
(51) Int. Cl.: B60R 21/00

(54) **Vorrichtung und Verfahren zum Erfassen eines Objektes oder einer Person im Innenraum eines Fahrzeugs**
Method and device for the detection of an object or a person in the interior of a vehicle
Procédé et dispositif pour la détection d'un objet ou d'une personne à l'intérieur d'un véhicule

(43) Veröffentlichungstag der Anmeldung: 30.08.2000
(73) Patentinhaber: SIEMENS AKTIENGESELLSCHAFT, 80333 München (DE)
(72) Erfinder: Roth, Christoph, Dr., Tokyo 141-8641 Shinagawa-Ku (JP); Hamperl, Reinhard, 93096 Köfering (DE); Rösl, Reinhard, 93173 Wenzenbach (DE); Waldmann, Alexander, 93059 Regensburg (DE); Stierle, Thomas, 93059 Regensburg (DE); Mader, Gerhard, Dr., 93107 Thalmassing (DE)

(56) Entgegenhaltungen:
- DE-A- 19 757 137
- US-A- 5 482 314
- PATENT ABSTRACTS OF JAPAN vol. 098, no. 001, 30. Januar 1998 (1998-01-30) & JP 09 240417 A (NISSAN MOTOR CO LTD), 16. September 1997 (1997-09-16)
- PATENT ABSTRACTS OF JAPAN vol. 097, no. 005, 30. Mai 1997 (1997-05-30) & JP 09 020206 A (NIPPON SEIKO KK), 21. Januar 1997 (1997-01-21)

## Beschreibung

Die Erfindung betrifft eine Vorrichtung sowie ein Verfahren zum Erfassen eines Objektes oder einer Person im Innenraum eines Fahrzeugs.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Vorrichtung zum berührungslosen Erkennen eines Objektes oder einer Person im Innenraum eines Fahrzeugs ist aus der EP 0 669 227 A1 bekannt. Dabei wird der Fahrzeugsitz durch eine Anzahl von Leuchtdioden bestrahlt. Vom Sitz bzw. einer Person oder einem Objekt auf dem Fahrzeugsitz reflektierte Strahlen werden durch ein Fotodetektorfeld aufgenommen.

Gewöhnlich wird eine solche bekannte Vorrichtung zur Objektund Personenerfassung als von der eigentlichen Steuereinrichtung für das Personenschutzmittel separat ausgebildetes Gerät im Fahrzeuginnenraum derart angeordnet, daß entweder eine Erkennung eines Insassen auf dem Fahrzeugsitz oder aber eine Abtastung einer Gefahrenzone vor dem zusammengefalteten Airbag ermöglicht wird. In letzterem Fall wird bevorzugt der Fahrzeuginnenraum oder zumindest ein Teil davon auf ein Vorhandensein eines Objektes oder einer Person untersucht. Wird ein Kindersitz oder ein Körperteil eines Insassen in dieser Gefahrenzone erkannt, so wird der Airbag nicht oder nur dosiert ausgelöst.

Die Vorrichtung wird mit einer Energieversorgung betrieben. Bei einem Aufprall, bei dem gerade die Insassenposition erkannt werden muß, um die Airbagentfaltung gegebenenfalls beeinflussen zu können, kann nun aufgrund mechanischer Einwirkung die Energieversorgung der Vorrichtung unterbrochen oder in Form eines Energieleckabflusses derart beeinträchtigt werden, daß die zum Betreiben des elektrischen Gerätes erforderliche Versorgungsspannung nicht mehr dauerhaft gewährleistet ist. Somit besteht bei einem Aufprall die Gefahr, daß die Vorrichtung gerade in den entscheidenden Millisekunden während der Aufpralls betriebsunfähig ist. Selbst bei einer noch aufrechten Energieversorgung mit verringerter Versorgungsspannung wird die Vorrichtung nicht mehr in der Lage sein, die erforderlichen Daten aufzunehmen und an eine Steuereinrichtung für das Personenschutzmittel abzugeben, da die Vorrichtung gewöhnlich Verbraucher mit einem hohen Energiebedarf wie z. B. Laserdioden enthält.

Aufgabe der Erfindung ist es deshalb, auch bei einer Beeinträchtigung der Energieversorgung einer bekannten Vorrichtung dennoch ausreichende Daten für die Steuereinrichtung für das Personenschutzmittel bereitstellen zu können.

Der die Vorrichtung betreffende Teil der Erfindungsaufgabe wird durch die Merkmale des Patentanspruchs 1 gelöst. Der das Verfahren betreffende Teil der Erfindungsaufgabe wird durch die Merkmale des Patentanspruchs 11 gelöst.

Dabei wird durch eine Steuereinheit der Vorrichtung bewerkstelligt, daß der Sensor zur Erfassung eines Objektes oder eines Insassen nur noch mit einer geringen mittleren Leistung betrieben wird, sofern die Energieversorgung als nicht mehr ausreichend für einen Normalbetrieb eingestuft wird. Dabei wird in diesem sogenannten Notfall-Betriebsmodus der Sensor mit einer gegenüber dem Normal-Betriebsmodus vorgesehenen mittleren Leistung verringerten mittleren Leistung betrieben.

Der Vorteil der Erfindung liegt darin, daß die verbleibenden Energiereserven wirtschaftlich ausgenutzt werden, wobei gegebenenfalls auf einen Anteil der maximal erzielbaren Sensorinformation verzichtet wird zugunsten einer Generierung von Sensordaten, die zumindest noch ein rudimentäres Abbild der Insassenposition an die Steuereinrichtung für das Personenschutzmittel geben können, auf Basis einer verringerten zur Verfügung stehenden Energie, dafür aber für eine Zeitspanne von etwa 150 Millisekunden.

Die Vorrichtung ist vorzugsweise aber nicht zwingend als separates elektrisches, gehäustes Gerät ausgebildet. Die Energieversorgung kann dabei als von außen dem Gerät zugeführte Versorgungsspannung, insbesondere als Fahrzeugbatteriespannung ausgebildet sein. Als Energieversorgung kann aber auch eine von außen zugeführte und im Gerät gewandelte Versorgungsspannung definiert sein. Weiterhin kann als Energieversorgung auch eine autarke Versorgung für das elektrische Gerät in Form von einer Batterie vorgesehen sein. Die Energieversorgung kann zudem durch einen Energiespeicherkondensator im elektrischen Gerät dargestellt werden, der dauerhaft von einer von außen zugeführten Versorgungsspannung gespeist wird, und eben dann die Energieversorgung für die Vorrichtung übernimmt, wenn die Standardenergieversorgung aus der Fahrzeugbatterie unterbrochen ist. Gerade dann ist der erfindungsgemäße ressourcenschonende Betrieb der Vorrichtung vorteilhaft.

Die Vorrichtung zum Erfassen eines Objektes oder einer Person kann auf den Gefahrenbereich vor einem zusammengefalteten Airbagmodul in Aufblasrichtung gerichtet sein und damit das Vorhandensein eines Objektes oder einer Person in diesem Bereich mitteilen. Es sind jedoch auch Erfassungsvorrichtungen für Objekte oder Personen anwendbar, die auf den Fahrzeugsitz gerichtet sind und eine Abweichung einer Person aus seiner Normalsitzposition ermitteln können. Es sind auch Erfassungsvorrichtungen anwendbar, die den gesamten vorderen Fahrzeuginnenraum abtasten und eine jegliche Art der Objekt- oder Personenposition erkennen können. Die Erfindung ist also nicht beschränkt auf das konkrete Erfassen eines Abbildes eines Objektes oder einer Person sondern insbesondere auch zur Überwachung von bestimmten Bereichen im Innenraum eines Fahrzeugs auf das Vorhandensein eines Objektes oder einer Person. Die Einrichtung ist dabei zur berührungslosen Erfassung ausgebildet.

Ein Sensor einer solchen Erfassungsvorrichtung kann auf unterschiedlichen physikalischen Wirkungsprinzipien beruhen:

So kann der Sensor vorzugsweise seinen Wirkungsbereich mittels optischer Strahlung, insbesondere infraroter Strahlung abtasten. Es sind jedoch aber auch Strahlungen mit anderen Wellenlängen vorstellbar. Der Sensor enthält dabei ein Leuchtdiode, insbesondere einen Infrarotsender in Form einer Laserdiode, der eine oder mehrere Strahlen oder Strahlungsvorhänge abgibt. Der Sensor enthält dann ferner ein oder mehrere optische Empfängerelemente in Form von Fotozellen, die die an einem Objekt oder einer Person reflektierte oder gestreute Strahlung aufnehmen. Durch Auswertung der reflektierten Strahlung kann der Abstand zwischen dem Sensor und dem Objekt sowie gegebenenfalls eine Konturierung und genaue Positionsbestimmung im zwei- oder dreidimensionalen Raum bestimmt werden. Vorzugsweise spannt der Sensor mehrere in Fahrtrichtung hintereinandergestaffelte Strahlenvorhänge in der vertikalen Ebene auf und enthält hinsichtlich der Querachse des Fahrzeugs mehrere Empfangselemente je Strahlenvorhang. So ist eine dreidimensionale Personen- oder Objekterkennung gewährleistet, da jedes Empfangselement eine Information zweidimensionaler Wertigkeit liefert und die dritte, vertikale Dimension durch eine Auswertung der Stärke, der Leistung oder des Energieinhalts einer reflektierten Strahlung gewonnen wird. Eine Erfassungseinrichtung mit einfachen technischen Mitteln weist z.B. nur eine den Entfaltungsraum des Airbgas abtastende Lichtschranke auf.

Der Sensor der Erfassungseinrichtung kann auch als Kamera ausgebildet sein und Bilder liefern, die im folgenden Verfahren der Mustererkennung unterzogen werden.

Der Sensor kann aber auch als Wärmefühler in Form eines Infrarotaufnehmers ausgebildet sein, der das Vorhandensein und die Position einer lebenden Person durch die von ihr abgegebenen Wärmestrahlung ermitteln kann.

Ferner sind auch Ultraschallsensoren oder Mikrowellensensoren einsetzbar.

Eine Objekt- oder Personenposition bei aktiver Bestrahlung des Objektes oder der Person wird vorzugsweise mit Hilfe der Methoden der Laufzeitmessung oder der Triangulation ermittelt.

Der Normal-Betriebsmodus für den Sensor ist dadurch gekennzeichnet, daß die Energieversorgung ausreichend Energie für den vorgesehenen Betrieb der Vorrichtung und insbesondere des Sensors liefern kann. Dabei wird der Sensor je nach seiner Ausbildung vorzugsweise mit einer vorgegebenen Abtastrate, mit einer vorgegebenen Sendeleistung und/oder mit mehereren Abtastzonen betrieben, die für eine genaue Bestimmung der Insassenposition während eines Aufpralls ausreichend sind. Zusammenfassend wird dabei der Sensor mit einer bestimmten mittleren Leistung betrieben. Die mittlere Leistung ergibt sich dabei aus einer zeitlich gemittelten Leistungsaufnahme über alle energieverbrauchenden Sensorelemente des Sensors-sofern mehrere Sensorelemente vorhanden sind - hinweg. Da der Sensor gepulst betrieben wird, ist zur Ermittlung der mittleren Leistung eine zeitliche Betrachtung vorteilhaft, die mehrere Pulse miteinbezieht.

Der Notfall-Betriebsmodus zeichnet sich nun dadurch aus, daß die Energieversorgung als für den vorbeschriebenen Normal-Betriebsmodus nicht mehr ausreichend erkannt wird. Vorzugsweise wird dazu ein elektrischer Parameter der Energieversorgung, insbesondere deren Versorgungsspannung überwacht. Unterschreitet dieser elektrische Parameter einen vorgegebenen Grenzwert, sorgt die vorzugsweise als Mikroprozessor ausgebildete Steuereinheit dafür, daß der Normal-Betriebsmodus beendet und der Nofall-Betriebsmodus aktiviert wird. Es erfolgt also ein Umschalten der Betriebsmodi. Beide Betriebsmodi finden ihre vorzugsweise Ausbildung in Form von Programmabschnitten in einem Software-Code. Im Notfall-Betriebsmodus wird der Sensor mit einer mittleren Leistung betrieben, die geringer ist als die mittlere Betriebsleistung im Normal-Betriebsmodus.

Dabei wird vorzugsweise die Sendeleistung von einem oder mehreren Sendern des Sensors, insbesondere die Sendeleistung der Laserdioden gesenkt. Dabei ist die abgesenkte Leistung jedoch derart zu bemessen, daß der Sensor ein noch meßbares Signal liefert. Die dafür ausreichende Leistung wird gewöhnlich von den Herstellern der Sender angegeben. Im Normal-Betriebsmodus wird die Sendeeinheit mit einer Leistung betrieben, die größer als diese Minimal-Sendeleistung ist, um in jedem Fall ein ausreichend empfindliches Signal zu erhalten.

In einer weiteren vorteilhaften Weiterbildung der Erfindung enthält der Sensor mehrere Sensorelemente wobei jedes Sensorelement zur Überwachung einer zugeordneten Zone ausgebildet ist. Je mehr derartige Sensorelemente vorgesehen sind, desto höher ist die Auflösung der Objektposition. Im Notfall-Betriebsmodus wird nun vorzugsweise nur noch ein Sensorelement mit einem Sender beziehungsweise eine geringe Anzahl von Sensorelementen, die kleiner ist als deren Gesamtanzahl, betrieben. Durch das Abschalten einzelner Sensorelemente im Notfall-Betriebsmodus wird die Auflösung zugunsten einer fortgeschriebenen Insassenpositionserkennung reduziert. Vorzugsweise wird bei einer Abtastung des Gefahrenbereiches vor einem Airbag nur mehr die zum gefalteten Airbag nächstliegende Zone abgetastet. In Summe wird damit die mittlere Betriebsleistung des Sensors verringert.

Bei einer weiteren vorteilhaften Weiterbildung der Erfindung wird die im Normal-Betriebsmodus vorgesehene Abtastrate verringert. Dabei kann die Abtastrate im Notfall-Betriebsmodus abhängig von der noch zur Verfügung stehenden Energiereserve bestimmt werden. Im Extremfall wird gegebenenfalls nur noch ein Bild aufgenommen. Bei mehreren energieverbrauchenden Sensorelementen kann die Abtastrate aller Sensorelemente verringert werden. Es kann aber auch nur die Abtastrate einzelner Sensorelemente verringert werden, insbesondere derjenigen Sensorelemente, die nicht den sicherheitskritischen Bereich unmittelbar vor dem Airbag aufnehmen. Mit der Reduzierung der Abtastrate wird ebenfalls die mittlere Leistung zur Erstellung zur Abbildung eines Objektes oder einer Person reduziert.

Weitere Weiterbildungen der Erfindung umfassen Mischformen der Leistungsreduzierung. So können einzelne, z.B. Randbereiche abtastende Sensorelemente des Sensors abgeschaltet werden. Diejenigen Sensorelemente, die höherpriore Information liefern, werden nur noch mit verringerter Abtastrate betrieben.

Die Energieversorgung im Notfall-Betriebsmodus kann folgende Formen annehmen: Bei einer unterdurchschnittlich ausgebildeten Versorgungsspannung wird die über die Fahrzeugbatterie betriebene Energieversorgung abgeschaltet. Die weitere Energieversorgung wird durch ein Notstromaggregat gewährleistet wie z. B. der Ladung eines Energiespeicherkondensators. Alternativ wird bei Unterschreiten einer vorgegebenen Versorgungsspannung das elektrische Gerät weiterhin aus dem Bordnetz betrieben.

Zusammenfassend weist die Erfindung den Vorteil auf, daß selbst bei einer Beeinträchtigung der Energieversorgung, vorwiegend im Falle eines Aufpralls, dennoch eine für die Insassenschutzsteuerung ausreichende Information über ein Objekt im Innenraum, die Position eines Kindersitzes oder eines Insassen und insbesondere das Vorhandensein eines Objektes oder Insassen im Gefahrenbereich eines Airbags geliefert wird.

Weitere vorteilhafte Weiterbildungen der Erfindung sind in den Unteransprüchen gekennzeichnet.

Die Zeichnung zeigt Ausführungsbeispiele der Erfindung und ihrer Weiterbildungen. Es zeigen:
- Figur 1: den Innenraum eines Kraftfahrzeuges im Ausschnitt,
- Figur 2: ein Blockschaltbild einer erfindungsgemäßen Vorrichtung.

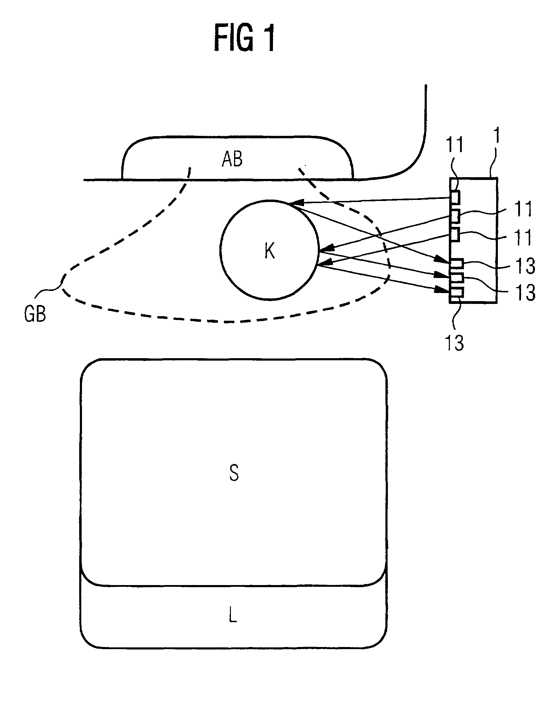

Figur 1 zeigt symbolisch in einer Draufsicht den beifahrerseitigen Innenraum eines Kraftfahrzeuges. Dabei kennzeichnet das Bezugszeichen AB ein hinter eine Abdeckung des Armaturenbretts angeordnetes Airbagmodul, das einen Gasgenerator und einen zusammengefalteten Luftsack enthält. Dieses Personenschutzmittel ist elektrisch mit einer nicht eingezeichneten Steuereinrichtung verbunden, die den Airbag im wesentlichen aufprall- und insassenpositionsabhängig steuert. Beabstandet zu dem Airbagmodul ist schematisch ein Sitz mit der Sitzfläche S und der Lehne L in Draufsicht eingezeichnet. In einem Bereich unmittelbar vor dem zusammengefalteten Airbag AB ist schematisch der Kopf K eines Insassen eingezeichnet. Der Gefahrenbereich GB ist dabei gestrichelt eingezeichnet und kennzeichnet den Airbag in seinem aufgeblasenen Zustand. Rechtsseitig ist ein Sensor 1 zum Erfassen eines Objektes angeordnet. Der Sensor 1 enthält drei optische Sender 11 sowie drei optische Empfänger 13. Je ein Sender 11 und ein Empfänger 13 bilden eine Sensoreinheit. Dabei wird von den Sendern 11 Infrarotlicht ausgegeben, das an einem gegebenenfalls im Gefahrenbereich GB des Airbags AB angeordneten Objektes K reflektiert und vom zugehörigen Empfänger 13 aufgenommen wird. Die Empfänger 13 sind als Fotoelemente ausgebildet. Der Abstand zwischen dem Sensor 1 und dem Objekt K wird über eine Laufzeitmessung oder ein Triangulationsverfahren ermittelt. Aufgrund der vorgesehenen mehrfachen Anzahl von Sensorelementen ist eine zumindest zweidimensionale Abbildung des Bereiches vor dem Airbag AB gewährleistet.

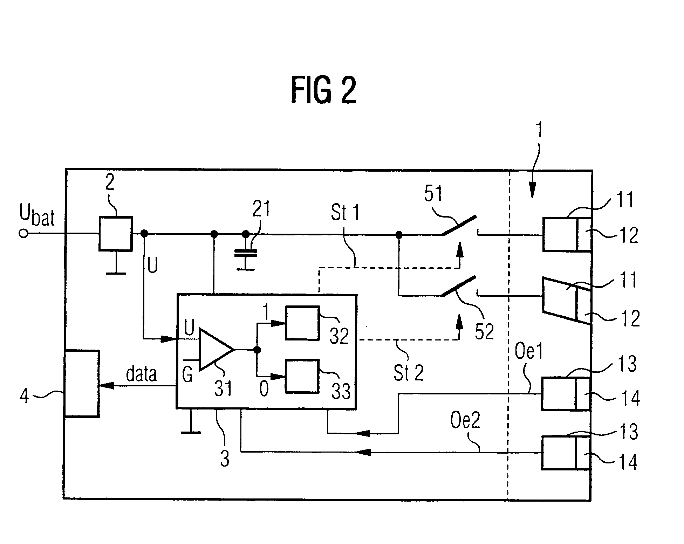

Figur 2 zeigt ein Blockschaltbild einer erfindungsgemäßen Vorrichtung zum Erfassen eines Objektes oder einer Person im Innenraum eines Fahrzeuges. Das elektrische Gerät enthält dabei einen Sensor 1 zum Erkennen eines Objektes mit zwei Sendern 11 mit jeweils einer Sendelinse 12 sowie zwei Empfängern 13 mit jeweils einer Empfängerlinse 14. Ferner enthält das Gerät eine Energieversorgung 2 und eine Steuereinheit 3 sowie eine Schnittstelle 4. Die Energieversorgung 2 ist dabei als Spannungswandler ausgebildet und wandelt eine zugeführte Fahrzeugbatteriespannung U_{bat} in eine zum Betreiben des Gerätes geeignete Spannung U, mit der insbesondere auch die als Mikroprozessor ausgebildete Steuereinheit 3 versorgt wird. Ferner speist die Energieversorgung 2 einen Energiespeicherkondensator 21. Die Versorgungsspannung U liegt an elektrisch steuerbaren Schaltern 50 und 52 an, die insbesondere als schaltbare Leistungstransistoren ausgebildet sind an. Die steuerbaren Schalter 51 und 52 wiederum sind mit den optischen Sendern 11 verbunden. Durch von der Steuereinheit 3 gelieferte Steuersignale ST1 und ST2 werden die steuerbaren Schalter 51 und 52 gesteuert. Im geschlossenen Zustand der steuerbaren Schalter 51 und 52 emittieren die optischen Sender 11 Licht. Durch ein kurzzeitiges Schließen eines der steuerbaren Schalter 51 und 52 wird daher ein Lichtimpuls durch den zugeordneten optischen Sender 11 emittiert. Die optischen Empfänger 13 wiederum liefern empfangene optische Signale als elektrische Größen OE1 und OE2 an die Steuereinheit 3. Die optischen Empfänger 13 erkennen ein Objekt im Erfassungsbereich der optischen Sender, welcher im wesentlichen durch die Sendeleistung und den Abstrahlwinkel betsimmt ist.

Die Steuereinheit 3 ist zum Steuern der steuerbaren Schalter 51 und 52 ausgebildet wie auch zum Verarbeiten der empfangenen Signale OE1 und OE2. Die Steuereinheit 3 enthält dazu im wesentlichen zwei Programme oder Programmabschnitte, die symbolisch mit dem Bezugszeichen 32 für eine Normal-Betriebsmodus und mit dem Bezugszeichen 33 für einen Notfall-Betriebsmodus gekennzeichnet sind. Diese Steuersoftware für den Normal-Betriebsmodus ist dabei derart ausgebildet, daß der steuerbare Schalter 51 zyklisch leitend geschaltet wird, wodurch von dem Sender 11 ein Lichtimpuls ausgegeben wird. Ein reflektierter Lichtstrahl wird von dem ersten Empfänger 13 optisch aufgenommen und in ein elektrisches Signal gewandelt. Das zugehörige Signal OE1 wird zunächst in einem nicht eingezeichneten Speicher der Steuereinheit 3 abgelegt. Im folgenden wird der weitere steuerbare Schalter 52 geschlossen und kurzzeitig danach wieder geöffnet, sodaß der zweite Sender 11 einen Lichtimpuls ausgibt. Der weitere Empfänger 13 liefert daraufhin ein Signal OE2 an die Steuereinheit, das dort wiederum zwischengespeichert wird. Es können mehrere aus jeweils einem Sender und einem Empfänger bestehende Sensorelemente vorgesehen sein. Die Anzahl richtet sich nach der erwünschten Auflösung des erhaltenen Bildes. Die Ansteuerung der weiteren Sensorelemente erfolgt nach dem vorbeschriebenen Prinzip.

Nach dem zeitlich versetzten Ansteuern aller Sensorelemente wird durch die Steuereinheit 3 auf Basis der Daten OE1 und OE2 ein virtuelles Bild erzeugt. Es kann auch eine andere Auswertung der Daten OE1 und OE2 erfolgen. Die Steuereinheit 3 liefert solche Auswerteergebnisse in Form von Signalen Data vorzugsweise in codierter Form an die Schnittstelle 4. Die Schnittstelle 4 ist vorzugsweise über eine Datenleitung mit einer Steuereinrichtung für das Personenschutzmittel verbunden. Die Steuereinrichtung für das Insassenschutzmittel wertet die übermittelten Daten nach ihren Bedürfnissen aus und steuert in Abhängigkeit von diesen Daten das oder die angeschlossenen Personenschutzmittel wie Airbags, Gurtstraffer, Überrollschutzmittel, etc..

Die Steuereinheit 3 enthält einen durch Software realisierten Vergleicher 31, der die Versorgungsspannung U oder die Bordnetzspannung U_{bat} mit einem Grenzwert G vergleicht. Übersteigt die Versorgungsspannung U den Grenzwert G, so wird das elektrische Gerät im Normal-Betriebsmodus 32 betrieben (Signal 1). Unterschreitet die Versorgungsspannung U den Grenzwert G, so wird das elektrische Gerät im Notfall-Betriebsmodus (33) betrieben (Signal 0 des Vergleichers). Um ein hochfrequentes Umschalten zwischen dem Normal- und dem Notfall-Betriebsmodus zu vermeiden, kann die Steuereinheit derart ausgebildet sein, daß ein erkannter Betriebsmodus in jedem Fall für eine vorgegebene Zeit angewendet wird. Der Vergleicher kann dazu auch ein Schaltverhalten mit Hysterese aufweisen.

## Patentansprüche

1. Vorrichtung zum Erfassen eines Objektes oder einer Person im Innenraum eines Fahrzeuges,
- mit einem Sensor (1) dafür,
- mit einer Energieversorgung (2),
- mit einer Steuereinheit (3) für den Sensor (1),
- mit einem Normal-Betriebsmodus (32) für den Sensor (1) bei durch die Steuereinheit (3) erkannter ausreichender Energieversorgung, bei dem der Sensor (1) eine erste mittlere Leistung aufnimmt, und
- mit einem Notfall-Betriebsmodus (33) für den Sensor bei durch die Steuereinheit (3) erkannter ungenügender Energieversorgung, bei dem der Sensor (1) eine zweite, gegenüber der ersten mittleren Leistung verringerte mittlere Leistung aufnimmt.

2. Vorrichtung nach Anspruch 1, bei der die Steuereinheit (3) zum Überwachen einer Versorgungsspannung (U) der Energieversorgung (2) ausgebildet ist.

3. Vorrichtung nach Anspruch 2, bei der die Steuereinheit (3) derart ausgebildet ist, daß der Notfall-Betriebsmodus (33) aktiviert wird, sobald die Versorgungsspannung (U) einen Grenzwert (G) unterschreitet.

4. Vorrichtung nach Anspruch 2 oder Anspruch 3, bei der die Steuereinheit (3) derart ausgebildet ist, daß der Normal-Betriebsmodus (32) aktiviert wird, sobald die Versorgungsspannung (U) einen Grenzwert (G) überschreitet.

5. Vorrichtung nach einem der vorhergehenden Ansprüche, bei der der Sensor (1) zum Abtasten eines Objektes oder einer Person mit einer vorgegebenen Abtastrate ausgebildet ist.

6. Vorrichtung nach Anspruch 5, bei der der Notfall-Betriebsmodus (33) eine gegenüber der vorgegebenen Abtastrate verringerte Abtastrate für den Sensor (1) vorsieht.

7. Vorrichtung nach einem der vorhergehenden Ansprüche, bei der der Sensor (1) mehrere Sensorelemente (11,13) enthält und jedes Sensorelement (11,13) zur Überwachung eines zugeordneten Gebietes ausgebildet ist.

8. Vorrichtung nach Anspruch 7, bei der der Notfall-Betriebsmodus (33) den Betrieb nur eines Sensorelements (11,13) oder nur einer geringeren Anzahl als die Gesamtanzahl von Sensorelementen (11,13) vorsieht.

9. Vorrichtung nach einem der vorhergehenden Ansprüche, bei der der Sensor (1) einen Sender (11) zum Aussenden eines Signals enthält, bei der der Normal-Betriebsmodus (32) einen Betrieb des Senders (11) mit einer ersten Sendeleistung vorsieht, und bei der der Notfall-Betriebsmodus (32) einen Betrieb des Senders (11) mit einer gegenüber der ersten Sendeleistung verringerten Sendeleistung vorsieht.

10. Vorrichtung nach einem der vorhergehenden Ansprüche, bei der der Sensor (1) eine optische Sendevorrichtung und eine optische Empfangsvorrichtung aufweist.

11. Verfahren zum Erfassen eines Objektes oder einer Person im Innenraum eines Fahrzeuges,
bei dem ein dafür vorgesehener Sensor (1) im Normal-Betriebsmodus (32) eine erste mittlere Leistung aufnimmt, bei dem eine Energieversorgung (2) zum Versorgen des Sensors (1) überwacht wird, und
bei dem der Sensor (1) bei erkannter ungenügender Energieversorgung in einem Notfall-Betriebsmodus mit einer zweiten, gegenüber der ersten mittleren Leistung verringerten mittleren Leistung betrieben wird, wenn die Energieversorgung als nicht mehr ausreichend für den Normalbetrieb (32) erkannt wird.

## Claims

1. Device to record an object or person in the interior of a vehicle,
- having a sensor (1) for this purpose,
- having an energy supply (2),
- having a control unit (3) for the sensor (1),
- having a normal operating mode (32) for the sensor (1) with an energy supply identified as sufficient by the control unit (3), with the sensor (1) capturing a first average power, and
- having a normal operating mode (33) for the sensor with an energy supply identified as not sufficient by the control unit (3), with the sensor (1) capturing a second reduced average power compared to the first average power.

2. Device according to Claim 1, with the control unit (3) being embodied to monitor a supply voltage (U) of the energy supply (2).

3. Device according to Claim 2, with the control unit (3) being embodied such that the emergency operating mode (33) is activated as soon as the supply voltage (U) falls below a limit value (G).

4. Device according to Claim 2 or Claim 3, with the control unit (3) being embodied such that the normal operating mode (32) is activated as soon as the supply voltage (U) exceeds a limit value (G).

5. Device according to one of the preceding claims, with the sensor (1) being embodied to scan an object or person at a preset scan rate.

6. Device according to Claim 5, with the emergency operating mode (33) providing a reduced scan rate for sensor (1) compared to the preset scan rate.

7. Device according to one of the preceding claims, with the sensor (1) containing several sensor elements (11, 13) and each sensor element (11, 13) being embodied to monitor an assigned zone.

8. Device according to Claim 7, with the emergency operating mode (33) providing the operation of only one sensor element (11, 13) or only that of a number of sensor elements (11,13) which is less than the total number.

9. Device according to one of the preceding claims, with the sensor (1) containing a transmitter (11) to transmit a signal, with the normal operating mode (32) providing the operation of the transmitter (11) at a first transmitter power and with the emergency operating mode (32) providing the operation of the transmitter (11) at a reduced transmitter power compared to the first transmitter power.

10. Device according to one of the preceding claims, with the sensor (1) having an optical transmitter device and an optical receiver device.

11. Method to record an object or person in the interior of a vehicle, with a sensor (1) provided for this purpose capturing a first average power in normal operating mode (32),
with an energy supply (2) being monitored to supply the sensor (1), and
with the sensor (1), in the event of insufficient energy supply being identified in an emergency mode, being operated at a second reduced average power compared to the first average power, if the energy supply is identified as no longer being sufficient for normal operation (32).

## Revendications

1. Dispositif pour détecter un objet ou une personne dans l'espace intérieur d'un véhicule,
- un capteur (1) prévu à cet effet,
- une alimentation en énergie (2),
- une unité de commande (3) pour le capteur (1),
- un mode de fonctionnement normal (32) pour le capteur (1), lorsqu'une alimentation en énergie suffisante est détectée par l'unité de commande (3), mode dans lequel le capteur (1) absorbe une première puissance moyenne, et
- un mode de fonctionnement de secours (33) pour le capteur, lorsqu'une alimentation en énergie insuffisante est détectée par l'unité de commande (3), mode dans lequel le capteur (1) absorbe une deuxième puissance moyenne, réduite comparativement à la première puissance moyenne.

2. Dispositif selon la revendication 1, dans lequel l'unité de commande (3) est conçue pour surveiller une tension d'alimentation (U) de l'alimentation en énergie (2).

3. Dispositif selon la revendication 2, dans lequel l'unité de commande (3) est conçue de manière que le mode de fonctionnement de secours (33) soit activé dès que la tension d'alimentation (U) devient inférieure à une valeur limite (G).

4. Dispositif selon la revendication 2 ou la revendication 3 dans lequel l'unité de commande (3) est conçue de manière que le mode de fonctionnement normal (32) soit activé dès que la tension d'alimentation (U) devient supérieure à une valeur limite (G).

5. Dispositif selon l'une des revendications précédentes, dans lequel le capteur (1) est conçu pour explorer un objet ou une personne avec une cadence d'exploration prédéterminée.

6. Dispositif selon la revendication 5, dans lequel le mode de fonctionnement de secours (33) prévoit pour le capteur une cadence d'exploration réduite comparativement à la cadence d'exploration prédéterminée.

7. Dispositif selon l'une des revendications précédentes, dans lequel le capteur (1) comprend plusieurs éléments de capteur (11, 13) et chaque élément de capteur (11, 13) est conçu pour surveiller une zone qui lui est attribuée.

8. Dispositif selon la revendication 7, dans lequel le mode de fonctionnement de secours (33) prévoit le fonctionnement d'un seul élément de capteur (11, 13) ou de seulement un nombre d'éléments de capteur (11, 13) plus petit que le nombre total des éléments de capteur.

9. Dispositif selon l'une des revendications précédentes, dans lequel le capteur (1) comprend un émetteur (11) pour émettre un signal, dans lequel le mode de fonctionnement normal (32) prévoit un fonctionnement de l'émetteur (11) avec une première puissance d'émission, et dans lequel le mode de fonctionnement de secours (32) prévoit un fonctionnement de l'émetteur (11) avec une puissance d'émission réduite comparativement à la première puissance d'émission.

10. Dispositif selon l'une des revendications précédentes, dans lequel le capteur (1) présente un dispositif d'émission optique et un dispositif de réception optique.

11. Procédé pour détecter un objet ou une personne dans l'espace intérieur d'un véhicule,
dans lequel un capteur (1) prévu à cet effet absorbe une première puissance moyenne dans le mode de fonctionnement normal (32), dans lequel une alimentation en énergie (2) destinée à alimenter le capteur (1) est surveillée et
dans lequel, lorsqu'une alimentation en énergie insuffisante est détectée, le capteur (1) est mis en fonctionnement dans un mode de fonctionnement de secours avec une deuxième puissance moyenne réduite comparativement à la première puissance moyenne, lorsque l'alimentation en énergie est reconnue comme n'étant plus suffisante pour le fonctionnement normal (32).
